# EUROPEAN PATENT SPECIFICATION

(11) **EP 1 212 936 B1**
(45) Date of publication and mention of the grant of the patent: **24.08.2005**
(21) Application number: 01204732.0
(22) Date of filing: 07.12.2001
(51) Int. Cl.: A01K 1/12, A01K 29/00, A01J 5/007

(54) **Remote service and check**
Ferndienst und Prüfung
Service à distance et contrôle

(30) Priority: 08.12.2000 NL 1016837
(43) Date of publication of application: 12.06.2002
(73) Proprietor: N.V. Nederlandsche Apparatenfabriek NEDAP, 7141 DC Groenlo (NL)
(72) Inventor: Harmsen, Jan Hendrik, 7255 BJ Hengelo (NL); Odinga, Kornelis, 7206 BG Zutphen (NL); Roesink, Robert Gerrit Herm-Jan, 7548 AS Enschede (NL)
(74) Representative: Prins, Adrianus Willem

(56) References cited:
- EP-A- 0 857 418
- WO-A-99/30277

## Description

The invention relates to a method for maintaining and checking an automated farm management system comprising a computer and a plurality of farming systems such as an automatic milking device, an automatic animal identification device or an automatic feeding device, each of which are connected to the computer.

According to a known method for maintaining and checking an automated farm management system, checking the farm management system is generally carried out by the user himself. When he finds a defect or an irregularity in the farm management system, in most cases he will have a service engineer examine the farm management system further and, if necessary, have errors in the farm management system rectified. This rectification of errors can entail, for instance, the replacement of parts.

Document EP-A-857 418 discloses an automated farm management system.

The invention aims to provide a more efficient method for maintaining and checking the automated farm management system. Accordingly, the method according to the invention is as defined in independent claim 1.

Preferred embodiments of the invention are set out in the dependent claims.

The user himself can replace modules or components of modules.

In particular, it holds that the module in which irregularities or defects have been detected or the at least one component of the module in which the irregularities or defects have been detected is preventively replaced with the replacement module or with the replacement component, respectively.

In this manner, problems with the hardware modules can be preventively remedied because before the real problem manifests itself the service software detects the problem and transmits it to the central service and/or the user. The central service can then contact the user so that the user can collect a replacement module or replacement sensors at the central service, or can have same collected and subsequently, install same or have same installed in the farm management system. It is also possible that the central service sends the replacement module or at least one replacement component to the user so that the user himself can replace the respective parts or have them replaced. It is also possible that the problem is directly transmitted to the user. Then, the system can be arranged such, that the irregularity or defect in one of the modules and/or in one of the components of one of the modules, detected by a service program, is automatically transmitted via the computer to the user of the farm management system. Then, the computer generates a message on, for example, a screen when, for example, this is started up and/or when certain keys of the computer are energized. It is also possible that a message about the irregularity or defect detected by the service program is transmitted to the user of the farm management system via Internet, a fixed telephone network and/or a mobile telephone network. In this latter case for instance, the user can be automatically called on his mobile phone to provide, in an automatic manner, for instance via an SMS message or via other information, data to the user about the problems found.

In particular, it holds that a number of the hardware modules are provided with components comprising sensors. The fact is that sensors have the property that, before they break down, they start exhibiting irregularities or defects. Therefore, according to the invention, in particular the sensors can be preventively replaced by the user himself.

The invention will be further elucidated on the basis of the drawing. In the drawing:

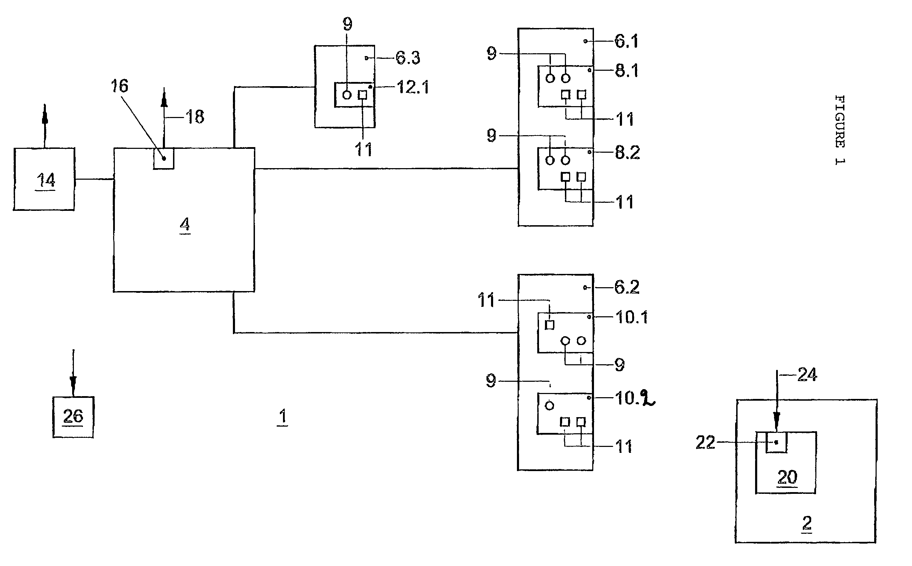

Fig. 1 shows a farm management system and a central service wherein a method for maintaining and checking the automated farm management system is applied.

In Fig. 1, the automated farm management system is indicated with reference numeral 1. A central service is indicated with reference numeral 2.

The farm management system comprises a computer 4 and a plurality of automatic farming devices 6.1, 6.2 and 6.3 which are connected to the computer 4. In this example, the farming devices involve an automatic milking device 6.1, an automatic animal identification device 6.2 and an automatic feeding device 6.3, respectively.

In this example, the milking device 6.1 is provided with two hardware modules 8.1 and 8.2. The hardware modules 8.1 and 8.2 are arranged so as to be easily removable from the milking device 6.1. This means that the respective modules can be easily removed and be replaced with a new module. Each module performs a specific task, while, in this example, on each module, besides the normal operating software, also a service program runs. The service program of each module checks whether the module and/or at least one component of the module displays irregularities or defects. A component of the module can be understood to mean electrotechnical circuits and/or sensors. The sensors can consist of, for instance, sensors known per se for measuring the conductivity of the milk and/or the temperature of the milk. In particular these sensors have the property that, in time, they may exhibit defects and/or irregularities. Preferably, the components are provided with standard components. The components too can be fitted in the modules so as to be easily replaceable. Hence, this means that a module can be easily uncoupled from the milking device, whereupon the component which does not function properly, such as, for instance, a sensor, can be readily replaced with a new component.

In this example, the milking device is provided with two of such modules. Completely analogously, in this example, the identification device is provided with two easily replaceable modules 10.1 and 10.2. The module 10.1 can for instance consist of a transmitter while the module 10.2 can consist of a receiver. The automatic feeding device 6.3 is also provided with an easily replaceable standard module 12.1, which, like the modules 10.1 and 10.2, is provided with electrotechnical circuits and sensors. The sensors at the standard module 12.1 can, for instance, consist of a sensor which checks to what extent the animal eats the food provided. The sensors of the module 10.2 of the identification device can for instance consist of a receiving stage. In this example, the module 10.1 is not provided with sensors.

Further, the computer 4 is coupled to a screen and a keyboard 14.

Further, the computer 4 is provided with a modem 16 which, in this example, is connected to a fixed telephone line 18.

The central service 2 comprises a computer 20 which is also provided with a modem 22, which modem 22 is connected to a fixed telephone network 24. Further, a mobile phone of a user of the farm management system is indicated with reference numeral 26.

The method applied with the system shown in Fig. 1 is as follows.

The service program of, for instance, the module 8.1 detects that there are irregularities or defects present in this module. More in particular, the service program of the module 8.1 detects whether at least one component 9, 11 of the respective module displays irregularities or defects. These checks can be carried out in a manner known per se. When the module 8.1 detects one of the irregularities and/or defects mentioned, it transmits this to the computer 4. The computer 4 receives this message and transmits the information about the irregularities or defects found via the modem 16 and the fixed telephone line 18, 24 to the computer 20 of the central service. On a screen, the computer 20 indicates which module and/or component displays an irregularity or defect. An employee of the central service reads the message and, in reaction thereto, will send a replacement module or a replacement component for, respectively, the module or the at least one component in which the defects and/or the irregularities have been found, to the user, in this case to the address where the automatic farm management system is disposed. The user receives the respective module and/or component and can proceed to preventively replace the module 8.1 or the component 9, 11 of the module 8.1, or have it replaced. How such a replacement is to be carried out is indicated in the instructions for use, which, in this example, have been sent by the central service together with the module and/or the component. It is also possible that sending the replacement module or the replacement component in reaction to the message received by the central service, be carried out completely automatically without intervention of the employee. The central service can be accordingly arranged in a manner known per se. Selecting the product to be sent from a stock, the optional packaging and franking can then be carried out, for instance, completely automatically in a manner known per se.

However, it is also possible that the computer 4 does not feed the information about the irregularities and/or defects found directly to the central service. It is also possible that on the screen 14, a message is generated, possibly after energizing a key of the keyboard 14, which message provides information about the detected irregularities. After having read this message, the user himself can contact the central service and have a replacement module and/or a replacement component sent to him or collect it or have it collected. Also in that case, the user himself can preventively replace the component and/ or the module or have it replaced. It is also possible that in reaction to the received message, an employee of the central service makes ready a replacement module or the replacement component so that the user can come and collect it at the central service. It is also possible that this preparation by the central service is carried out completely automatically when the central service receives the message mentioned, The central service can be arranged accordingly in a manner known per se. Selecting the product to be prepared from a stock and, possibly, the packaging can then, for instance, be carried out in a manner known per se and completely automatically.

It is also possible that the computer 4 sends the information about the irregularities and/or defects found, for instance, in the form of an SMS message via the modem 16 and the fixed net 18 to the mobile phone 26 of the user. When reading the message, the user can again contact the central service 2 and have a replacement module and/or replacement component sent to him. It is also possible that the user goes to the central service to collect a replacement module and/or a replacement component. In both cases, the user himself will eventually preventively replace the module 8.1 or components 9, 11 of the module 8.1.

If, in an automatic manner, information about the defects and/or irregularities found at the module 8.1 is transmitted by the computer 4 to the central service 2, it is evidently also possible that the central service 2 itself contacts the user and confers whether the user desires that a replacement module and/or component be sent to him, or that the user collects it himself.

In this example, each hardware module is provided with a service program which checks the respective hardware module on which the service program runs and/or the at least one component of the hardware module on which the service program runs, for irregularities or inaccuracies. This entails that the irregularities or the inaccuracies found in the modules 8.2 to 12.1 are checked in the same manner and are possibly preventively repaired as discussed in relation to the module 8.1.

It is also possible, but not according to the invention, that the service program mentioned is only run on the computer 4, the computer 4 checking each of the modules 8.1 to 12.1 for irregularities or defects. When the service program observes a defect or irregularity in one of the modules or component of the modules, it can automatically transmit this information to the computer 2 of the central service, display it on the screen 14 or automatically send it to the mobile phone 26. The further handling is completely analogous to the above described.

As set forth hereinabove, the central service provides information to the user about the replacement of the module or the component. This can be done in the form of instructions for use. Naturally, it is also possible that the computer 20 sends a message to the computer 4 or to the mobile phone 26. Optionally, information can be sent from the computer 20 to the computer 4 via Internet. Also, the information can be sent as an SMS-message to the mobile phone 26. However, other communication systems for data traffic are also possible.

It is also possible that the service program which has established the respective irregularity, provides information to the user about the manner in which the module or the component has to be replaced. This information can then be displayed on a screen 14 again. It is also possible that the information be sent to the mobile phone 26 in the form of an SMS-message.

The invention is not in any way limited to the embodiments outlined hereinabove. For instance, the actions of the central service can be completely automated. Then, it is conceivable that the replacement module and/or the replacement component are selected completely automatically from the stock room and are prepared to be sent to the user or be made ready so that the user can collect them himself.

In this example, the service program of the module 8.1 checks the module 8.1. The service program of the module 8.2 checks the module 8.2 *et cetera*. However, it is also possible that only one of the modules of the farm device 6.1, 6.2, 6.3 be provided with a service program for checking all modules of the respective farming devices 6.1, 6.2, 6.3 for defects and/or inaccuracies. In this example, the components of the module 8.1 consist of hardware electronics components 9 and sensors 11. The mobile communication device 26 can also comprise a laptop which, for instance, can communicate with the computer 14 and/ or the computer 20 via Internet. Such variants are all understood to fall within the scope of the invention as defined in the appended claims.

## Claims

1. A method for maintaining and checking an automated farm management system comprising a computer (4) and a plurality of automated farming devices such as an automatic milking device (6.1), an automatic animal identification device (6.2) or an automatic feeding device (6.3), each of which are connected to the computer, wherein a number of the farming devices and optionally also the computer are provided with hardware modules (8.1, 8.2, 10.1, 10.2, 12.1) each performing a task, wherein, on the system, besides the normal operating software, also a service program runs which checks at least one of the modules and/or at least one component of the modules for irregularities or defects, wherein the system is arranged such that an irregularity or defect in one of the modules and/or in one of the components of one of the modules, detected by the service program, is automatically transmitted to a central service and/or to a user of the farm management system, in reaction to which the central service sends at least one replacement module or a replacement component for the module in which the irregularities or defects have been detected to the user, or in reaction to which the user collects a replacement module or a replacement component for the module in which the irregularities or inaccuracies have been detected at the central service point, or has it collected, whereupon the user himself, subsequently, replaces the module in which the irregularities or defects have been detected with the replacement module or replaces the component of the module in which the irregularities or defects have been detected with the replacement component, or has it replaced, **characterised in that** the service program runs on at least one of the hardware modules (8.1, 8.2, 10.1, 10.2, 12.1) and optionally also on the computer (4).

2. A method according to claim 1, **characterized in that** each hardware module is provided with a service program which checks the respective hardware module where this service program runs and/or the at least one component of the hardware module where this service program runs, for the irregularities or the inaccuracies.

3. A method according to any one of the preceding claims, **characterized in that** the module in which the irregularities or defects have been detected or the at least one component of the module in which the irregularities or defects have been detected, respectively, is preventively replaced with the replacement module or with the replacement component.

4. A method according to any one of the preceding claims, **characterized in that** the central service provides information to the user about the replacement of the module or the component.

5. A method according to any one of the preceding claims, **characterized in that** the service program provides information to the user about the replacement of the module or the component.

6. A method according to any one of the preceding claims, **characterized in that** the system is arranged such that the irregularity or defect in one of the modules and/or in one of the components, detected by the service program is automatically transmitted to the central service and optionally to the user of the farm management system via Internet, a fixed telephone network and/or a mobile phone network.

7. A method according to any one of the preceding claims, **characterized in that** the irregularity or defect in one of the modules and/or in one of the components of one of the modules, detected by the service program, is automatically transmitted to the user of the farm management system via the computer.

8. A method according to any one of the preceding claims, **characterized in that** a number of the hardware modules is provided with components which comprise sensors.

9. A method according to any one of the preceding claims, **characterized in that** the hardware modules are provided with a number of standard components.

10. A method according to any one of the preceding claims, **characterized in that** the central service is arranged to automatically send the replacement module or the replacement component to the user.

11. A method according to any one of preceding claims 1-9, **characterized in that** the central service is arranged to automatically make ready the replacement module or the replacement component to be collected at the service point.

## Patentansprüche

1. Verfahren zum Instandhalten und Überprüfen eines automatisierten Farm-Management-Systems mit einem Computer (4) und mehreren automatisierten Farm-Vorrichtungen, wie z.B. einer automatischen Melkvorrichtung (6.1), einer automatischen Tier-Identifikationsvorrichtung (6.2), einer automatischen Fütterungsvorrichtung (6.3), von denen jede mit dem Computer verbunden ist, wobei eine Anzahl von Farm-Vorrichtungen und wahlweise auch der Computer mit Hardware-Modulen (8.1, 8.2,10.1,10.2,12.1) versehen sind, von denen jedes eine Aufgabe ausführt, wobei in dem System neben der Normalbetriebs-Software auch ein Service-Programm läuft, das mindestens eines der Module und/oder mindestens eine Komponente der Module auf Irregularitäten oder Defekte hin überprüft, wobei das System derart ausgeführt ist, dass eine von dem Service-Programm detektierte Irregularität oder ein von dem Service-Programm detektierter Defekt in einem der Module und/oder einer der Komponenten eines der Module, automatisch an eine zentrale Service-Stelle und/oder einen Benutzer des Farm-Management-Systems übermittelt wird, woraufhin die zentrale Service-Stelle mindestens ein Ersatzmodul oder eine Ersatzkomponente für das Modul, in dem die Irregularitäten oder Defekte detektiert worden sind, an den Benutzer sendet, oder woraufhin der Benutzer ein Ersatzmodul oder eine Ersatzkomponente für das Modul, in dem die Irregularitäten oder Ungenauigkeiten detektiert worden sind, an der zentralen Service-Stelle abholt oder abholen lässt, woraufhin der Benutzer selbst anschließend das Modul, in dem die Irregularitäten oder Defekte detektiert worden sind, durch das Ersatzmodul ersetzt oder die Komponente des Moduls, in dem die Irregularitäten oder Defekte detektiert worden sind, durch die Ersatzkomponente ersetzt oder ersetzen lässt,
**dadurch gekennzeichnet, dass**
das Service-Programm auf mindestens einem der Hardware-Module (8.1,8.2,10.1,10.2,12.1) und wahlweise auch auf dem Computer (4) läuft.

2. Verfahren nach Anspruch 1, **dadurch gekennzeichnet, dass** jedes Hardware-Modul mit einem Service-Programm ausgestattet ist, das das jeweilige Hardware-Modul, auf dem das Service-Programm läuft, und/oder mindestens eine Komponente des Hardware-Moduls, auf dem das Service-Programm läuft, auf die Irregularitäten oder Ungenauigkeiten hin überprüft.

3. Verfahren nach einem der vorhergehenden Ansprüche, **dadurch gekennzeichnet, dass** das Modul, in dem die Irregularitäten oder Defekte detektiert worden sind, bzw. mindestens eine Komponente des Moduls, in dem die Irregularitäten oder Defekte detektiert worden sind, präventiv durch das Ersatzmodul oder die Ersatzkomponente ersetzt wird.

4. Verfahren nach einem der vorhergehenden Ansprüche, **dadurch gekennzeichnet, dass** die zentrale Service-Stelle dem Benutzer Informationen über das Ersetzen des Moduls oder der Komponente übermittelt.

5. Verfahren nach einem der vorhergehenden Ansprüche, **dadurch gekennzeichnet, dass** das Service-Programm dem Benutzer Informationen über das Ersetzen des Moduls oder der Komponente übermittelt.

6. Verfahren nach einem der vorhergehenden Ansprüche, **dadurch gekennzeichnet, dass** das System derart ausgeführt ist, dass die von dem Service-Programm detektierte Irregularität oder der von dem Service-Programm detektierte Defekt in einem der Module und/oder in einer der Komponenten automatisch über das Internet, ein Telefon-Festnetz und/oder ein Mobiltelefon-Netz an die zentrale Service-Stelle und wahlweise an den Benutzer des Farm-Management-Systems übermittelt wird.

7. Verfahren nach einem der vorhergehenden Ansprüche, **dadurch gekennzeichnet, dass** die von dem Service-Programm detektierte Irregularität oder der von dem Service-Programm detektierte Defekt in einem der Module und/oder in einer der Komponenten eines der Module automatisch über den Computer an den Benutzer des Farm-Management-Systems übermittelt wird.

8. Verfahren nach einem der vorhergehenden Ansprüche, **dadurch gekennzeichnet, dass** eine Anzahl von Hardware-Modulen mit Komponenten versehen ist, die Sensoren aufweisen.

9. Verfahren nach einem der vorhergehenden Ansprüche, **dadurch gekennzeichnet, dass** die Hardware-Module mit einer Anzahl von Standardkomponenten versehen sind.

10. Verfahren nach einem der vorhergehenden Ansprüche, **dadurch gekennzeichnet, dass** die zentrale Service-Stelle derart aufgebaut ist, dass sie automatisch das Ersatzmodul oder die Ersatzkomponente an den Benutzer sendet.

11. Verfahren nach einem der vorhergehenden Ansprüche 1-9, **dadurch gekennzeichnet, dass** die zentrale Service-Stelle derart aufgebaut ist, dass sie automatisch das Ersatzmodul oder die Ersatzkomponente zur Abholung an der Service-Stelle bereitstellt.

## Revendications

1. Procédé pour entretenir et contrôler un système de gestion automatisée d'exploitation agricole, comprenant un ordinateur (4) et une pluralité de dispositifs d'exploitation agricole automatisés comme un dispositif de traite automatique (6.1), un dispositif d'identification automatique (6.2) d'animaux ou un dispositif de nourrissage automatique (6.3) dont chacun est relié à l'ordinateur, un certain nombre des dispositifs d'exploitation agricole et éventuellement aussi l'ordinateur étant pourvus de modules matériels (8.1, 8.2, 10.1, 10.2, 12.1) exécutant chacun une tâche, dans lequel, dans le système, outre le logiciel d'exploitation normal, un programme d'entretien fonctionne également et contrôle au moins l'un des modules et/ou au moins un composant des modules pour vérifier s'ils présentent éventuellement des irrégularités ou des défauts, le système étant agencé de façon qu'une irrégularité ou un défaut dans l'un des modules et/ou dans l'un des composants d'un des modules, détecté par le programme de dépannage, est automatiquement communiqué à un service central et/ou à un utilisateur du système de gestion d'exploitation agricole, à la suite de quoi le service central envoie à l'utilisateur au moins un module de remplacement ou un composant de remplacement pour le module dans lequel les irrégularités ou défauts ont été détectés, ou à la suite de quoi l'utilisateur se procurc au point de service central un module de remplacement ou un composant de remplacement pour le module dans lequel les irrégularités ou imprécisions ont été détectées, ou encore il le fait prendre, après quoi l'utilisateur lui-même remplace par le module de remplacement le module dans lequel les irrégularités ou défauts ont été détectés ou remplace par le composant de remplacement le composant du module dans lequel les irrégularités ou défauts ont été détectés, ou fait remplacer celui-ci, **caractérisé en ce que** le programme d'entretien est exécuté sur au moins un des modules logiciels (8.1, 8.2, 10.1, 10.2, 12.1) et éventuellement aussi sur l'ordinateur (4).

2. Procédé selon la revendication 1, **caractérisé en ce que** chaque module matériel est pourvu d'un programme d'entretien qui contrôle le module matériel respectif où est exécuté ce programme d'entretien et/ou le/les composants du module matériel où est exécuté ce programme d'entretien, pour rechercher d'éventuelles irrégularités ou imprécisions.

3. Procédé selon l'une quelconque des revendications précédentes, **caractérisé en ce que** le module dans lequel les irrégularités ou défauts ont été détectés ou le/les composants du module dans lequel les irrégularités ou défauts ont été détectés est respectivement remplacé par le module de remplacement ou par le composant de remplacement.

4. Procédé selon l'une quelconque des revendications précédentes, **caractérisé en ce que** le service central fournit à l'utilisateur des informations sur le remplacement du module ou du composant.

5. Procédé selon l'une quelconque des revendications précédentes, **caractérisé en ce que** le programme d'entretien fournit à l'utilisateur des informations sur le remplacement du module ou du composant.

6. Procédé selon l'une quelconque des revendications précédentes, **caractérisé en ce que** le système est conçu de façon que l'irrégularité ou défaut présent dans l'un des modules et/ou dans l'un des composants, détecté par le programme d'entretien est communiqué automatiquement au service central et éventuellement à l'utilisateur du système de gestion d'exploitation agricole par Internet, par un réseau de téléphonie fixe et/ou un réseau de téléphonie mobile.

7. Procédé selon l'une quelconque des revendications précédentes, **caractérisé en ce que** l'irrégularité ou défaut présent dans l'un des modules et/ou dans l'un des composants d'un des modules, détecté par le programme d'entretien, est communiqué automatiquement à l'utilisateur du système de gestion d'exploitation agricole par l'intermédiaire de l'ordinateur.

8. Procédé selon l'une quelconque des revendications précédentes, **caractérisé en ce qu'**un certain nombre des modules matériels sont pourvus de composants qui sont constitués par des détecteurs.

9. Procédé selon l'une quelconque des revendications précédentes, **caractérisé en ce que** les modules matériels sont pourvus d'un certain nombre de composants classiques.

10. Procédé selon l'une quelconque des revendications précédentes, **caractérisé en ce que** le service central est conçu pour envoyer automatiquement à l'utilisateur le module de remplacement ou le composant de remplacement.

11. Procédé selon l'une quelconque des revendications 1 à 9, **caractérisé en ce que** le service centrale cst conçu pour rendre disponible le module de remplacement ou le composant de remplacement à prendre au point de service.
